# EUROPEAN PATENT APPLICATION

(11) **EP 2 933 182 A1**
(43) Date of publication of application: **21.10.2015**
(21) Application number: 14164630.7
(22) Date of filing: 14.04.2014
(51) Int. Cl.: B63B 21/50

(54) **External turret having bogie wheels**

(71) Applicant: Single Buoy Moorings Inc, 1723 Marly (CH)
(72) Inventor: Toggiani, Jean-Yves Silvain, Les Pyretres, 06190 Roquebrune Cap Martin (FR); Monsigny, Guillaume, 59100 Kuala Lumpur (MY); Botta, Hervé, 06200 Nice (FR)
(74) Representative: Nederlandsch Octrooibureau

(57) **Abstract**

The invention relates to an external turret assembly (1) for mooring a floating vessel (2) to a seabed comprising an extension construction (3) with a turntable (12), a turret (4) rotatably secured within the turntable (12) via a bearing assembly (5, 6) and provided at its lower end with a chaintable (11), the bearing assembly (5, 6) comprising a first bearing means (5) near the upper end of the turret (4) for transfer of axial mooring forces and second bearing means (6) for transfer of radial mooring forces, the second bearing means (6) being positioned between the first bearing means (5) and the chaintable (11), wherein the distance along the turret axis (X) between the first bearing means (5) and the second bearing means (6) is smaller than the diameter of the bearing assembly (5, 6) and the first bearing means (5) comprises bogie wheels (28).

## Description

### Field of the invention

The present invention relates to external turret-vessel assembly for use in offshore vessels and Floating Production Units (FPUs) such as Floating Storage and Offloading vessels (FSOs) and Floating Production Storage and Offloading vessels (FPSOs) wherein a turret is rotatably connected to the bow or stem of the vessel and wherein the turret is connected to hydrocarbon production risers and is fixed to the sea bed via mooring lines and anchors, so that the vessel can weathervane about the turret.

### Background

Such an external turret-vessel assembly is generally known in the art. For offshore applications there is an increased tendency to use floating structures, such as vessels, to replace platforms for the exploitation of oil wells. One reason is the lower cost involved whilst the other one is the possibility to store produced hydrocarbons that are received via hydrocarbon fluid risers connected from the wells on the seabed, in the storage tanks of the vessel.

The turret which is rotatably connected to a moonpool of a vessel via a bearing system, is also a connection point for multiple risers that are connected to the seabed based wellheads and which are transferring the hydrocarbons form the wells to the process equipment onboard of the vessel.
Especially for mild to medium marine environments, external turret mooring arrangements are preferred over internal turrets, since such external turrets do not require extensive and expensive modifications to the vessel internal structure (internal integrity of the vessel), as only a bow or stem modification is needed. An addition advantage of an external turret is that no hydrocarbon storage tanks need to be used, which is the case for turrets which are placed internal the vessel hull.

Such an external turret-vessel assembly generally comprises a steel box-type frame structure that can be either close to or extended at some distance from the bow or stem of the vessel, and providing a foundation for a rotating bearing arrangement. An additional advantage is that the complete turret can be located above seawater level.

The turret accommodates a chaintable with chainhawsers to which mooring legs (chains, wire cable, polyester wire or combinations thereof) are connected and include space for the risers, the risers pipes, the riser connections and or manifolding. The mooring legs may be fastened to the seabed by anchors or (suction) piles. Product and utility connections are made between the facilities on the vessel and the seabed via a swivel stack placed on the turret, allowing the vessel to weather vane around the fixed turret whilst continuing the flow of hydrocarbons frm the wells to the process equipment onboard the production vessel.

To optimize the use of sub sea oil wells and to optimize the efficiency of the production vessel on an offshore hydrocarbon field, there is a need to increase the number and/ or the diameter of risers or conduits extending through the turret must be increased, especially as normally more wells are tied-in during the production phase and therefore more risers needed to be connected to the turret.

Hence, to increase efficiency, the external turret needs to be capable to allow for a large number of risers and there is a need for larger diameter external turrets. When scaling up the size of the diameter of the known external turret, the limits are determined by the external position of the turret (due to the structural length beams of the vessel) as well as the maximum diameter of the axial-radial 3-race roller bearing which is typically used to support the external turrets. The axial-radial 3 race roller bearing is further limited in loads and in case of disfunctioning or problems, cannot be replaced in situ without a time consuming overhaul process and an interruption of the hydrocarbon production process. A lengthy and costly replacement, repair and overhaul operation is needed with process downtime to solve the problem with the external turret bearing.

EP2145819 Al describes a mooring system wherein the main bearing assembly comprises at least two separate roller bearings which are manipulable such that the one or the other or both bearings are in an operative position, thus allowing the non-operative bearing to be replaced, overhauled, repaired and alike in situ, thus avoiding the downtime during the replacement and/or repair operation. Such a solution may be deemed rather complicated and requires the presence of two separate roller bearings which significantly increases the cost and engineering requirements of the system. If one of the bearings needs to be replaced or chanced out completely, production still needs to be shut down as otherwise the piping within the bearing van not be dismantled so to allow for an removal of the bearing to be replaced, which is a very costly overhaul process.

### Summary of the invention

It is an object of the present invention to provide an external turret-vessel assembly which reduces the disadvantages and limitations of the above mentioned known systems and methods.

Thereto, an external turret assembly is provided for mooring a floating vessel to a seabed comprising an extension construction, such as a frame, with a turntable suitable to be connected to the bow or stem end of the vessel, a turret rotatably secured within the turntable via a bearing assembly and provided at its lower end with a chaintable with chainhawsers for connecting mooring lines and which in working conditions is placed above water level, the bearing assembly comprising a first bearing means near the upper end of the turret for transfer of axial mooring forces and second bearing means for transfer of radial mooring forces, the second bearing means being positioned between the first bearing means and the chaintable, characterized in that the distance along the turret axis between the first bearing means and the second bearing means is smaller than the diameter of the second bearing means and the first bearing means comprises bogie wheels.

The external turret-vessel assembly according the invention allows for a larger diameter, larger loads handling and a more reliable external turret compared with the known external turrets.

The inventors have observed that the specific distance between the first axial bearing means and the second radial bearing means significantly reduces the moments of the forces, acting on the turret, reducing the wear of the bearing means and thereby increases the service life. In the event of wear, disfunctioning and/or damage of the first or second bearing means, the assembly allows for an in situ replacement or repair of the bogie wheel unit in the first bearing means and/or an slide pad in the second bearing means, avoiding any process downtime during the replacement and/or repair operation.

The use of bogie wheels for a turret has been described in document EP 0 942 864 A, which is hereby incorporated by reference and the applicant refers to this document for the details of the first axial bearing means comprising a bogie wheel arrangement.

According to an embodiment of the present invention, the external turret-vessel assembly is characterized in that turret is surrounded by a permanent barrage enclosure.

The presence of such an enclosure protects the bearing means from the aggressive marine environment and ensures a longer service life of the different components of the bearing.

According to an embodiment of the present invention, the external turret-vessel assembly is characterized in that the radial circular bearing comprises a plurality of roller wheels.

According to an embodiment of the present invention, the external turret-vessel assembly is characterized in that both the first axial and the second radial bearing means are placed above water level.

According to an embodiment of the present invention, the external turret-vessel assembly is characterized in that the turret comprises a riser deck for receiving a plurality of risers extending from the sea floor, placed at a position higher than the firs bearing means along the direction of the turret.

Advantageous embodiments are further defined by the dependent claims.

### Brief description of drawings

Presently preferred embodiments are described below in conjunction with the appended drawing figures, wherein like reference numerals refer to like elements in the various figures, and wherein:
Figure 1 illustrates a schematic side view of an external turret-vessel assembly according to the invention;
Figure 2 illustrates an enlarged detail of figure 1 of several components of the external turret-vessel assembly according to the invention in cross-section; and
Figure 3 illustrates a top view of an embodiment of the external turret of the external turret-vessel assembly according to the invention.

### Detailed description of embodiments

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

Furthermore, the terms first, second, third and the like in the description are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description are used for descriptive purposes and not necessarily for describing relative positions. The terms so used are interchangeable under appropriate circumstances and the embodiments of the invention described herein can operate in other orientations than described or illustrated herein.

The term "comprising" should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting of only components A and B. It means that with respect to the present description, the only relevant components of the device are A and B.

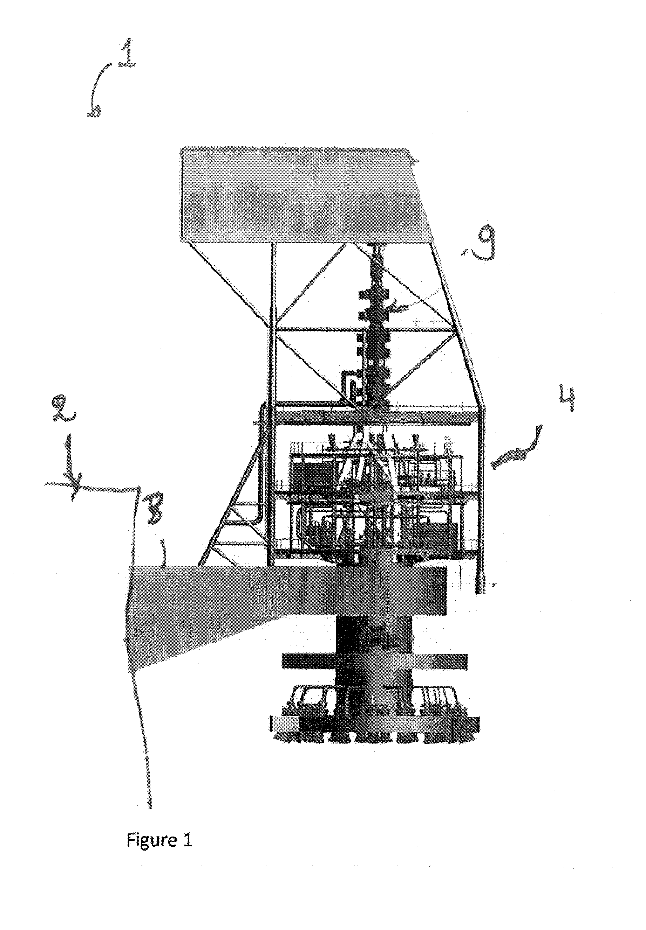

Figure 1 schematically illustrates the external turret-vessel assembly 1. The vessel is indicated by 2. It is understood that vessel 2 may refer to any floating structure that can be used with the invention. Frame 3 extends from the bow of the vessel 2, but it may equally extend from the stem of the vessel 2. On top of the turret a swivel 9 is provided for realizing a fluid connection between the risers extending from the sea floor and the pipes on the vessel 2.

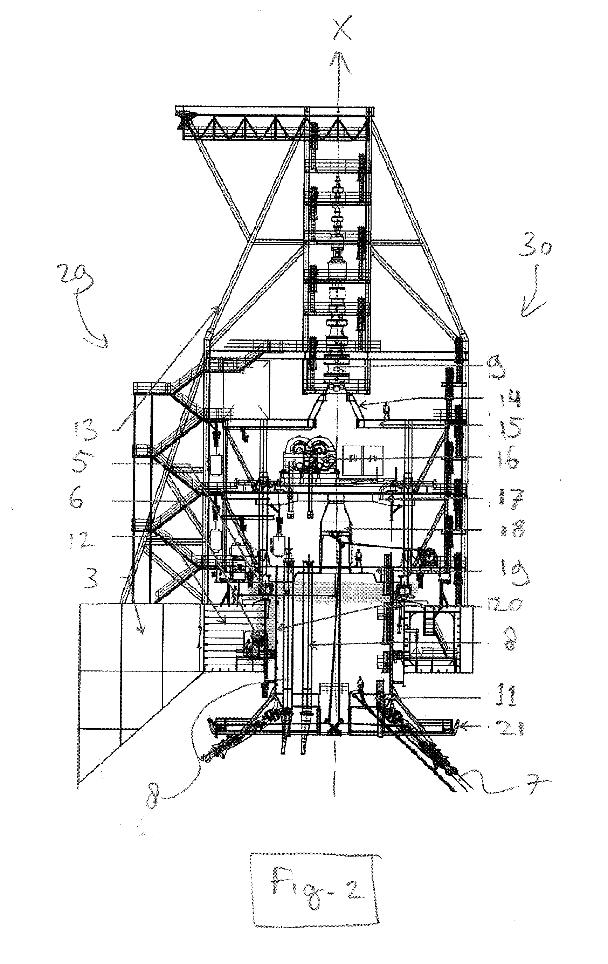

In figure 2 an enlarged detail is shown of several components of the external turret-vessel assembly 1. It can be seen that an external turret 4 having a turret axis X is rotatably secured to the frame 3 by bearing means 5, 6 provided between the frame 3 and the turret 4 and supporting the weight of the turret 4. A first axial bearing means 5 comprising a bogie wheel arrangement and a second radial circular bearing means 6 are provided. The radial circular bearing means 6 may for example comprise a plurality of slide pads or a plurality of roller wheels. In Figure 2, the turret 4 has a lower end anchored by at least one mooring line 7 which extends to the sea floor for anchoring the turret 4 in a geostationary position, in particular a chain table 11. In the embodiment shown in figure 2, the turret 4 comprises a riser deck 8 for receiving a plurality of risers extending from the sea floor, placed at a position higher than the first axial bearing means 5 and the second radial bearing means 6 along the direction of the turret 4.

An external turret single point mooring system 1 can comprise first bearing means in the form of axial bogies 5 and second bearing means in the form of radial wheels 6. The system 1 can be permanently integrated to the production vessel 2 and allows the vessel 2 to passively "weathervane" and take up the position of least resistance to the prevailing weather, while simultaneously transferring fluids, power and control signals between the subsea facilities and the floater.

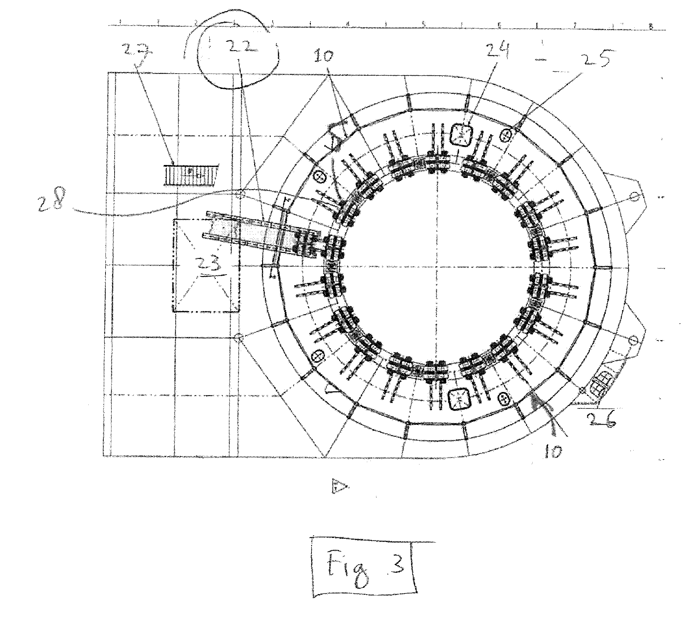

The proposed external turret mooring system 1 comprises a fixed part (geo-stationary) 30 and rotating part 29. The turret fixed part 30 (geo-stationary) forms the non-weathervaning side of the vessel 2 mooring which includes the turret cylinder 20, chaintable 11 at the lower rim and manifold. It is connected to the vessel 2 via a large diameter bogie system, as shown more clearly in figure 3.

The turret cylinder 20 and chaintable 11 are located within a cylindrical moon-pool inside the turntable 12. Located atop is the manifold structure which houses piping, installation and production equipment, and the swivel stack 9.

The fixed part 30 houses the riser termination and the piping between the riser hang-off flange and the swivel entry. The fixed part structure 30 transfers the mooring loads from the anchor legs and the riser loads to the rigid arm via the turntable 12.

The rotating part 29 is attached to the vessel 2 hence weathervanes around the fixed part 30. Typically the rotating part 29 comprises the turntable 12 and rigid arm and gantry 13.

The components comprised by the fixed turret part 30 (connected via mooring lines 7 to the seabed) will be explained in more detail hereafter:

### Chaintable 11

The chaintable 11 has two functions:
1. Support the unijoints and transfers the mooring loads to the turret 4
2. Serve as hang-off point to risers and umbilicals and/or their bending stiffeners.

The chaintable 11 is designed as a ring box structure. It accommodates two concentric rows of guide pipes in 3 sectors, through which risers 8 and umbilicals will be guided and to which bend stiffeners will be fixed. I-Tubes dimensions are mainly driven by the risers 8 they accommodate.

The ring structure also accommodates 3 unijoint castings, each connected to a bundle of mooring line 7 and chainconnector assemblies in four (4). To facilitate the mooring and riser hook-up of the FPSO there is provided below the chaintable 11 a grated access platform or sub-chaintable platform 21. This platform 21 is located below the chaintable 11 and will be a permanent fixture with a removable section to ease the installation and maintenance along the system design life.

### Turret Cylinder 20

The turret cylinder 20 links the chaintable 11 to the riser deck 19 at the top. It is a fabricated cylindrical shell structure with ring stiffeners, designed to resist water and to support all the riser I-tubes which enclose the risers 8 and umbilicals. It provides a load transfer path from the chain attachment to the weathervaning system.

### Riser Deck 19

The turret riser deck structure 19 provides the support for the riser 8 terminations and a mounting for the manifold decks. All riser 8 I-tubes terminate through the riser deck 19 in one or more concentric rows of riser termination supports. The circumferential part of the riser deck structure 19 is a fabricated steel cylindrical shell structure that connects to the turret cylinder 20, and accommodates respectively the horizontal running race of the axial bogie wheels 5, 28 (see figure 3) and, if needed, the vertical running race of the radial wheels 6. The weight of the turret 4 and the vertical loads from the anchor legs, risers 8, and umbilicals are transferred through the axial bogie wheels 5, 28 to the turntable 12, while the horizontal mooring loads are transmitted through the radial wheels 6.

### Manifold Structure

The turret manifold is installed on top of the riser deck 19 and is formed of several grated decks. Access from one deck to the other is provided through vertical ladders and stairways located on the gantry 13 and accessible via the provided rotating part access platforms that are flush with the manifold decks.

The winch deck 17 supports the main installation winch 16 used for the anchoring legs and risers 8 hook-up.

The swivel stack 9 is seated on a shaft, namely a swivel support 14 which is located at the centre deck or Subsea Equipment Room (SER) deck 15. The bottom of the shaft is open to allow passage for the piping routed from the manifold decks to the swivels and to provide access to the underside of the swivel stack 9.

The components comprised by the rotating turret part 29 (connected to the vessel) will be explained in more detail hereafter:

### Turntable 12

The turntable 12 structure is attached to the rigid arm 3 or extension construction 3 and comprises a welded steel box structure cantilevered off the rigid arm 3. It includes a central opening into which fits the turret fixed part.

On top of the turntable 12, a thick annular plate provides support to the axial bogies 5, 28 while two other thick annular plates provide housing to the radial wheels 6 below, such as a few meters below, for instance 5-20 m, preferably 8-15 m, such as 10 m. It is through the turntable 12 that all of the loads are transferred from the turret fixed part 30 to the vessel 2 via the rigid arm 3.

The turntable 12 provides adequate top deck surface to allow maintenance and inspection personnel to gain access to the fixed part 30 of the turret including the weathervaning components. It also provides the support for the gantry 13 that sits on top of it. Reliable functioning of the turntable 12 structure is ensured by having a sufficiently rigid structure so that deformations due to mooring loads are minimized.

### Rigid Arm 3 or extension construction 3

The turret 4 will be linked to the vessel 2 structure via the rigid arm 3 or extension construction 3 and is the main structural interface between the vessel 2 and the turret 4.

### Gantry 13

The gantry 13 structure is an elevated braced framework that bridges the turret manifold decks and surrounds the swivel stack.

A frame structure providing access to the various levels of the swivel stack 9 and supporting the individual swivel drive mechanisms is integrated on the gantry 13 structure. A stairway access system and a ladder access system are provided to permit safe entry to the platforms around the swivel stack.

A trolley beam is arranged on top of this frame structure for material handling and swivel maintenance.

The gantry 13 structure, which rotates with the vessel 2, supports the process, hydraulic, and utility piping, and the power and signal cables connected between the vessel 2 and the rotating section of the swivel stack 9.

Figure 3 shows a top view of an embodiment of the external turret 4 of the external turret-vessel assembly 1 wherein the turret 4 is surrounded by a permanent barrage enclosure 10. The barrage enclosure 10 reduces the risk that the aggressive marine environment damages the bearing means and ensures a longer service life of the different components of the bearing.

Furthermore, a permanent bogie evacuation rail structure 22 is shown for evacuating bogie wheels 28 as comprised by the first bearing means 5, preferably in a radial direction.

Primary and secondary accesses 27, 26 are also provided as well as a turret laydown area 23. A maintenance hatch 24 for the radial wheels is provided as well along with an access hatch 25 to the radial wheel access platform.

The foregoing description details certain embodiments of the invention. It will be appreciated, however, that no matter how detailed the foregoing appears in text, the invention may be practiced in many ways. It should be noted that the use of particular terminology when describing certain features or aspects of the invention should not be taken to imply that the terminology is being re-defined herein to be restricted to including any specific characteristics of the features or aspects of the invention with which that terminology is associated.

While the above detailed description has shown, described, and pointed out novel features of the invention as applied to various embodiments, it will be understood that various omissions, substitutions, and changes in the form and details of the device or process illustrated may be made by those skilled in the technology without departing from the spirit of the invention. The scope of the invention is indicated by the appended claims rather than by the foregoing description. All changes which come within the meaning and range of equivalency of the claims are to be embraced within their scope.

### List of reference numerals

1. External turret-vessel assembly
2. Vessel
3. Frame
4. External turret
5. First axial bearing means
6. Radial circular bearing means
7. Mooring line
8. Riser
9. Swivel
10. Barrage enclosure
11. Chain table
12. Turntable
13. Gantry
14. Swivel support
15. Subsea Equipment Room deck
16. Main installation winch
17. Winch deck
18. Winch pedestal
19. Riser deck
20. Turret cylinder
21. Sub-chaintable platform
22. Permanent bogie evacuation rail structure
23. Turret laydown area
24. Maintenance hatch for radial wheel
25. Access hatch to radial wheel access platform
26. Secondary access
27. Primary access
28. Bogie wheel
29. Turret rotating part
30. Turret fixed part

## Claims

1. External turret assembly (1) for mooring a floating vessel (2) to a seabed comprising:
- an extension construction (3) with a turntable (12) suitable to be connected to the bow or stem end of the vessel,
- a turret (4) rotatably secured within the turntable (12) via a bearing assembly (5, 6) and provided at its lower end with a chaintable (11) with chainhawsers for connecting mooring lines and which in working conditions is placed above water level,
- the bearing assembly (5, 6) comprising a first bearing means (5) near the upper end of the turret (4) for transfer of axial mooring forces and second bearing means (6) for transfer of radial mooring forces, the second bearing means (6) being positioned between the first bearing means (5) and the chaintable (11),
**characterized in that** the distance along the turret axis (X) between the first bearing means (5) and the second bearing means (6) is smaller than the diameter of the bearing assembly (5, 6) and the first bearing means (5) comprises bogie wheels (28).

2. External turret assembly (1) according to claim 1, **characterized in that** the second bearing means (6) comprises replaceable circumferentially placed radial roller wheels.

3. External turret assembly (1) according to claim 1 or 2, **characterized in that** the first bearing means (5) are placed within a closed water barrage enclosure (10) to protect the bearing means against (sea) water ingress.

4. External turret assembly (1) according to any of the preceding claims, **characterized in that** the turret (4) comprises a riser deck (19) for receiving a plurality of risers (8), the riser deck being placed along the turret axis (X) above the first bearing means (5).

5. External turret assembly (1) according to any of the preceding claims, **characterized in that** the height of the turntable (12) is at most 60% of the turret height.

6. External turret assembly (1) according to any of the preceding claims, **characterized in that** the chaintable (11) is provided with a sub-chaintable platform (21) with a diameter that is larger than the bearing assembly diameter.

7. External turret assembly (1) according claim 7, **characterized in that** the sub-chaintable platform (21) is provided with means to fix the position of chainhawsers during transport.

8. Mooring lines (7) suitable to be connected to an external turret assembly (1) according to any of the preceding claims

9. An offshore vessel (2) provided with an external turret assembly (1) according any of the preceding claims.
